# EUROPÄISCHE PATENTANMELDUNG

(11) **EP 0 879 975 A2**
(43) Veröffentlichungstag der Anmeldung: **25.11.1998**
(21) Anmeldenummer: 98109189.5
(22) Anmeldetag: 20.05.1998
(51) Int. Cl.: F16D 65/10

(54) **Bremsetrommel-Baugruppe sowie Herstellverfahren dafür**

(30) Priorität: 24.05.1997 DE 19721773
(71) Anmelder: ITT MANUFACTURING ENTERPRISES, INC., Wilmington, Delaware 19801 (US)
(72) Erfinder: Thiel, Rudolf, 60488 Frankfurt (DE)
(74) Vertreter: Portwich, Peter

(57) **Zusammenfassung**

Ausgehend von einer Bremstrommel-Baugruppe (1), bestehend aus einer topfförmigen Bremstrommel (2), die verdrehfest an einer Nabe (3) einer Fahrzeugachse befestigt ist sowie einem verdrehsicher an der Bremstrommel (2) angeordneten Reibring (6), an den bei Bremsbetätigung zumindest eine Bremsbacke radial anlegbar ist, besteht die Aufgabe der Erfindung darin, den Reibring (6) über die gesamte Lebensdauer der Bremstrommel (2) bzw. jeden Betriebszustand der gesamten Trommelbremse sicher innerhalb der Bremstrommel (2) zu befestigen. Dazu werden Bremstrommel-Werkstoff und Reibring-Werkstoff derart gezielt aufeinander abgestimmt, daß sie einen nahezu gleichen thermischen Ausdehnungskoeffizienten besitzen und zudem eine sich aufgrund ihrer Werkstoffeigenschaften möglicherweise ergebende elektrochemische Korrosion zwischen Reibring (6) und Bremstrommel (2) vermieden wird. Im Sinne der Realisierung eines Leichtbaukonzeptes für eine gesamte Trommelbremse ist dabei idealerweise ein Leichtmetall-Werkstoff für die Bremstrommel sowie ein mit entsprechendem Leichtmetallbestandteil versehener Metal-Matrix-Composite-Werkstoff (MMC) für den Reibring (6) vorzusehen.

## Beschreibung

Die Erfindung betrifft eine mehrteilige Bremstrommel-Baugruppe gemäß dem Oberbegriff des Patentanspruchs 1 sowie auch ein Herstellverfahren für eine solche Bremstrommel-Baugruppe.

Aus dem Stand der Technik sind seit langem herkömmliche Bremstrommelbauarten bekannt, bei denen jeweils in die einteilige Bremstrommel eine Reibfläche integriert ist, mit der die Bremsbacke bzw. die Bremsbacken bei Bremsbetätigung in Reibkontakt tritt bzw. treten. Derartige Bremstrommeln, die üblicherweise gegossen sind, weisen unterschiedliche Nachteile auf, u.a. ein hohes Gewicht, was insbesondere bei künftigen Leichtbau-Fahrzeugkonzepten in hohem Maße unerwünscht ist.

Darüber hinaus sind mehrteilige Bremstrommeln bekannt, bei denen ein Reibring als eigenständiges Bauteil verdrehfest an der radial innenliegenden Seite der topfförmigen Bremstrommel befestigt ist. So offenbart die amerikanische Patentschrift US 3 005 259 eine Bremstrommel aus Aluminium mit einem Reibring aus einem Gußeisenwerkstoff, wobei der Reibring mittels radialer Hinterschneidungen verdrehfest an der Bremstrommel befestigt ist. Als zusätzlicher Aspekt ist die Bremstrommel einstückig mit einer Nabe für ein Fahrzeugrad verbunden, wobei die Nabe an ihrer radialen Innenseite entsprechende Lagerflächen zur Aufnahme von zugehörigen Achslagern aufweist.

Die EP 0 002 581 A1 beschreibt ferner eine dreiteilige Bremstrommel, bestehend aus einem Trägerblech, einem Reibring aus Eisenwerkstoff sowie einem den Reibring umgebenden Bremstopf aus Leichtmetall. Bei beiden letztgenannten Ausführungsvarianten von mehrteiligen Bremstrommeln ergeben sich neben korrosionsbedingten, vor allem wärmespezifisch bedingte Probleme vor allem an den Befestigungsstellen zwischen den Bauteilen unterschiedlichen Werkstoffs. Dabei besteht sowohl die Gefahr der elektrochemischen Korrosion, beispielsweise zwischen Reibring aus einem Eisenwerkstoff und der Bremstrommel aus einem Leichtmetall als auch die Gefahr der unterschiedlichen thermischen Verformung von Reibring und Bremstrommel aufgrund verschiedener thermischer Ausdehnungskoeffizienten der jeweiligen Werkstoffe. Die beschriebenen Nachteile können damit insbesondere bei Leichtbaubremsen oder aber bei Hochleistungstrommelbremsen zu Funktionsproblemen an der Bremse führen.

Ausgehend vom aufgeführten Stand der Technik besteht die Aufgabe der Erfindung darin, für eine gattungsgemäße Bremstrommel-Baugruppe Bremstrommel und Reibring derart verdrehsicher aneinander zu befestigen, daß über die gesamte Lebensdauer der Bremstrommel-Baugruppe und bei allen Betriebszuständen ein sicherer Halt des Reibringes an der Bremstrommel gewährleistet ist.

Gelöst wird die Aufgabe durch die Merkmalskombination des Patentanspruches 1. Danach bestehen Reibring und Bremstrommel aus unterschiedlichen Werkstoffen, wobei Bremstrommelwerkstoff und Reibringwerkstoff einen nahezu gleichen thermischen Ausdehnungskoeffizienten besitzen. Bei thermischer Belastung der Bremstrommel-Baugruppe tritt damit eine nahezu gleichmäßige Verformung der Bremstrommel wie auch des Reibringes ein, die somit keine Auswirkungen auf die verdrehsichere Befestigung der beiden Bauteile aneinander ausübt. In einer Weiterentwicklung der Erfindung sind Bremstrommelwerkstoff und Reibringwerkstoff mit ihrer jeweiligen Zusammensetzung an etwa der gleichen Stelle innerhalb der elektrischen Spannungsreihe der chemischen Elemente anzusiedeln, wodurch sich zwischen den beiden unterschiedlichen Werkstoffen nur ein sehr geringer Potentialunterschied ergibt. Damit kann erfolgreich die Gefahr der elektrochemischen Korrosion zwischen Bremstrommel und Reibring infolge ihres unterschiedlichen Werkstoffes auf ein Minimum reduziert werden.

Aus Gründen der Gewichtsersparnis ist es besonders günstig, die Bremstrommel aus Leichtmetall zu fertigen, vorzugsweise aus Aluminium oder Titan. Damit kann das Gesamtgewicht der Bremse insbesondere gegenüber herkömmlichen Bremstrommeln aus Gußeisen erheblich reduziert werden.

In einer bevorzugten Ausführungsvariante der Bremstrommel-Baugruppe besteht der Reibring aus einem Metal-Matrix-Composite-Werkstoff (MMC), der neben metallischen- auch nichtmetallische Werkstoffanteile enthält. Idealerweise werden diese nichtmetallischen Bestandteile von keramischen Partikeln bzw. Fasern gebildet (beispielsweise Siliciumcarbid oder Aluminiumoxid), wodurch der MMC-Werkstoff eine sehr hohe Belastbarkeit und thermische Resistenz erhält. Diese Eigenschaften sind für den Reibring in besonderem Maße erwünscht, da sie Funktionsvorteile an der Trommelbremse bewirken bei vergleichsweise geringem Gewicht. Allgemein erfolgt der Übergang von einem Leichtmetall zur Verwendung eines auf Leichtmetall basierenden MMC-Werkstoffes annähernd gewichtsneutral. Zur Nutzung der Vorteile eines Bremstrommelwerkstoffs und eines zugehörigen Reibringwerkstoffes mit annähernd gleichem thermischen Ausdehnungskoeffizient und etwa gleichem Potentialwert in der elektrischen Spannungsreihe ist es in Kombination besonders vorteilhaft, die Bremstrommel aus einem Leichtmetall zu fertigen und den zugehörigen Reibring aus einem MMC-Werkstoff, wobei der Metallanteil des Reibringwerkstoffes idealerweise mit eben diesem Leichtmetall der Bremstrommel übereinstimmt. Daraus ergeben sich annähernd gleiche thermische Verformungseigenschaften für den Reibring und die Bremstrommel und gleichsam tritt nahezu keine elektrochemische Korrosion zwischen Reibring und Bremstrommel auf. Der verdrehsichere Halt des Reibringes innerhalb der Bremstrommel kann also weder durch thermische Belastung an der Bremstrommelbaugruppe noch durch sonstige Einflüsse (aggressive Witterung z.B. bei Fahrt auf salzgestreuter Fahrbahn im Winter) beeinträchtigt werden.

In einer vorteilhaften Weiterentwicklung der Erfindung ist die Nabe einer zugehörigen Fahrzeugachse einstückig an die Bremstrommel angeformt. Damit ergibt sich eine gewichtsgünstige und kompakte Bauform, bei der an der radialen Innenfläche der Nabe bevorzugt Lagerflächen für die Anlage zugehöriger Achslager vorgesehen sind.

In den weiteren Unteransprüchen wird darüber hinaus um Schutz ersucht für verschiedene Verfahren zur Herstellung einer gattungsgemäßen Bremstrommel-Baugruppe. Eine Variante schlägt dabei vor, den bereits fertigen Reibring mit dem Bremstrommelwerkstoff zu umgießen, wobei sich eine formschlüssige, ggf. auch stoffschlüssige Verbindung zwischen Reibring und Bremstrommel erzielen läßt. Der verdrehsichere Halt des Reibringes innerhalb der Bremstrommel kann dabei noch erhöht werden, indem man Maßnahmen an den einander zugewandten Oberflächen des Reibringes und der Bremstrommel ergreift, die den Formschluß bzw. Reibschluß noch erhöhen (z.B. Aufrauhen, radiale Vorsprünge vorsehen, Hinterschneidungen bilden oder ähnliches). Bei dem beschriebenen Herstellungsverfahren kann es insbesondere bei Verwendung ähnlicher Materialien für den Reibring und die Bremstrommel erforderlich sein, den Reibring zumindest stellenweise während des Umgießens mit dem Bremstrommelwerkstoff zu kühlen. Diese Maßnahme trägt dafür Sorge, daß bei Verwendung von Werkstoffen für Reibring und Bremstrommel mit annähernd gleichem Schmelzpunkt der Reibring während des Umgießens nicht aufschmilzt.

Analog dazu kann in einer anderen Variante der Reibring in die bereits fertige Bremstrommel eingegossen werden (z.B. im Schleudergußverfahren).

Eine weitere vorteilhafte Möglichkeit eines Herstellungsverfahrens sieht vor, die Bremstrommel und den Reibring auf mechanischem Wege unlösbar und verdrehfest miteinander zu verbinden (z.B. durch Einpressen, Verstemmen, Einschrumpfen, Rollnieten etc.). Diese Variante stellt die fertigungstechnisch einfachste Möglichkeit dar.

Ausführungsbeispiele der Erfindung werden anhand der Zeichnung dargestellt und im folgenden näher erläutert.

Es zeigen:
- Fig. 1: eine geschnittene Ansicht einer Bremstrommel-Baugruppe mit zweiteiliger Ausführung der Bremstrommel und der Nabe,
- Fig. 2: eine geschnittene Darstellung einer Bremstrommel-Baugruppe mit einteiliger Ausführung der Bremstrommel und der Nabe.

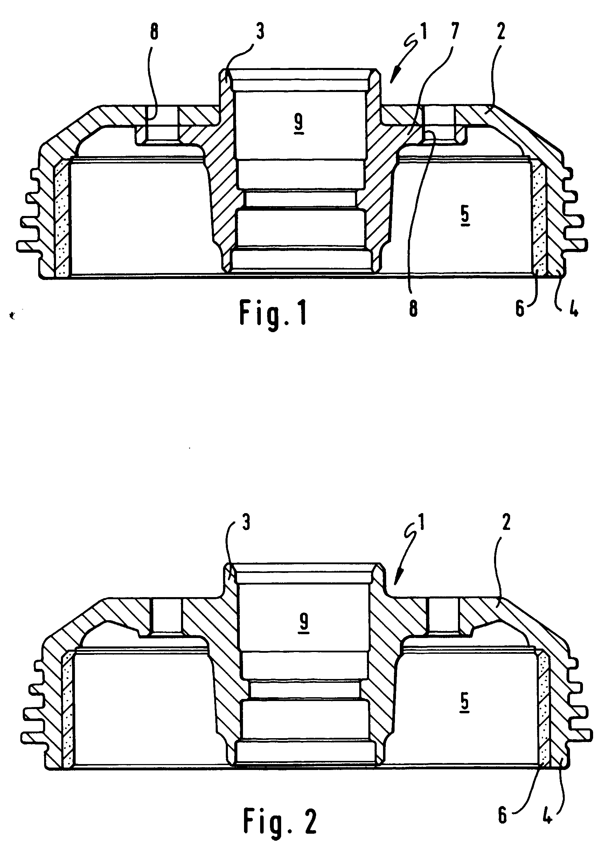

Den beiden Figuren sind Ausführungsvarianten einer Bremstrommel-Baugruppe 1 zu entnehmen, bei denen die Bremstrommel 2 und die Nabe 3 einer Fahrzeugachse nach Fig. 1 zweiteilig ausgeführt sind bzw. nach Fig. 2 einteilig miteinander verbunden sind. Für beide Ausführungsformen besitzt die Bremstrommel 2 eine topfförmige Gestalt und nimmt in ihrem Inneren eine nicht gezeigte Trommelbremse auf, die üblicherweise mit ihren Komponenten auf einem Trägerblech montiert ist und zwischen Nabe 3 und in Achsrichtung verlaufender Wand 4 der Bremstrommel 2 angeordnet ist. Dabei ist bei aus dem Stand der Technik seit langem bekannten Bremstrommeln an der radialen Innenfläche der axial sich erstreckenden Wand 4 üblicherweise eine Reibfläche 5 ausgebildet, an die die nicht gezeigte Bremsbacke bzw. die mehreren Bremsbacken bei Bremsbetätigung in Anlage gebracht werden kann bzw. können. Bei Verbesserung der Funktion solcher Bremstrommeln, sei es hinsichtlich ihrer Leistungsfähigkeit oder aber hinsichtlich ihres Gewichtes, ist man häufig bestrebt, die Bremstrommel 2 aus einem gewichtsgünstigen Werkstoff zu fertigen. Dabei tritt in der Regel das Problem auf, daß bei Ausbildung der Reibfläche 5 unmittelbar an der Bremstrommel 2 nicht die funktionellen und thermischen Erfordernisse an die gesamte Trommelbremse erfüllt werden können. Daher ist es nötig, die Bremstrommel mit einem Reibring 6 zu versehen, an den die Reibfläche 5 ausgebildet ist und der verdrehsicher innerhalb der Bremstrommel 2 befestigt ist. Derartige Reibringe 6 können aus einem anderen Werkstoff als die Bremstrommel 2 gefertigt werden, wobei häufig an der Kontaktfläche zwischen Reibring 6 und axialer Wand 4 bei ungeeigneter Werkstoffauswahl für die Bremstrommel 2 und den Reibring 6 elektrochemische Korrosion auftritt. Die elektrochemische Korrosion zwischen Reibring 6 und Bremstrommel 4 gefährdet nicht zuletzt die verdrehsichere Halterung des Reibringes 6 innerhalb der Bremstrommel 2 und kann dabei bei fortgeschrittenem Stadium ein Versagen der gesamten Trommelbremse verursachen.

Darüber hinaus besteht bei Verwendung von unterschiedlichen Materialien für Bremstrommel 2 und Reibring 6 die Gefahr, daß bei starker thermischer Belastung insbesondere des Reibringes 6 und der Bremstrommel 2 diese sich aufgrund ihrer unterschiedlichen thermischen Ausdehnungskoeffizienten verschieden stark thermisch verformen und somit eine Beeinträchtigung der verdrehsicheren Halterung zwischen Reibring 6 und Bremstrommel 2 bewirken.

In den aus den Figuren hervorgehenden Bremstrommel-Baugruppen 1 ist daher vorgesehen, Bremstrommel 2 und Reibring 6 aus unterschiedlichen Werkstoffen herzustellen, wobei der Bremstrommel-Werkstoff und der Reibring-Werkstoff einen nahezu gleichen thermischen Ausdehnungskoeffizienten besitzen. Damit wird eine in etwa gleichförmige thermische Ausdehnung von Bremstrommel 2 und Reibring 6 gewährleistet, wodurch die verdrehsichere Befestigung des Reibringes 6 innerhalb der Bremstrommel 2 bestehen bleibt. Ergänzend dazu besitzen Bremstrommel-Werkstoff und Reibring-Werkstoff idealerweise einen etwa gleichen Potentialwert innerhalb der elektrischen Spannungsreihe der chemischen Elemente, was das Auftreten von elektrochemischer Korrosion an der Kontaktfläche zwischen Reibring 6 und Bremstrommel 2 verhindert. Damit kann die Gefährdung der verdrehsicheren Befestigung des Reibringes infolge starker elektrochemischer Korrosion ebenso vermieden werden.

Zur Einsparung von Gewicht, insbesondere im Sinne künftiger Leichtbau-Fahrzeugkonzepte, sind die in den Figuren dargestellten Bremstrommeln 2 aus einem Leichtmetallwerkstoff ausgeführt (z.B. Aluminium bzw. Titan). Der Reibring 6 hingegen, der aufgrund der Ausbildung der Reibfläche 5 erhöhten Werkstoffanforderungen unterliegt, besitzt keramische Bestandteile und ist insbesondere aus einem Metal-Matrix-Composite-Werkstoff (MMC) hergestellt. Derartige MMC-Werkstoffe, die auf Grundlage metallischer Basisanteile zusätzlich keramische Bestandteile beispielsweise in Form von Partikeln bzw. Fasern enthalten, besitzen thermisch wie auch mechanisch äußerst leistungsstarke Werkstoffeigenschaften. Gerade solche Werkstoffeigenschaften sind für die Ausbildung des Reibringes 6 bzw. der Reibfläche 5 äußerst erwünscht. Zur Gewährleistung eines annähernd gleichen thermischen Ausdehnungskoeffizienten für den Reibring 6 und die Bremstrommel 2, wird der MMC-Werkstoff des Reibringes 6 zumindest anteilig mit eben diesem Leichtmetall versehen (in der Regel Aluminium), aus dem die Bremstrommel 2 besteht. Dadurch ergeben sich für Bremstrommel 2 und Reibring 6 annähernd gleiche thermische Ausdehnungseigenschaften. Gleiches gilt dabei auch für den Potentialwert innerhalb der elektrischen Spannungsreihe der chemischen Elemente. Der MMC-Werkstoff auf Leichtmetallbasis des Reibringes 6 und der Leichtmetallwerkstoff der Bremstrommel 2 selbst besitzen eine annähernd gleiche Position innerhalb der Spannungsreihe und reduzieren damit die Anfälligkeit der Verbindung zwischen Reibring 6 und Bremstrommel 2 für elektrochemische Korrosion auf ein Minimum. Die verdrehsichere Verbindung zwischen Reibring 6 und Bremstrommel 2, die durch beliebige reibschlüssige, formschlüssige oder stoffschlüssige Maßnahmen erhöht werden kann (z.B. Aufrauhen der Kontaktfläche zwischen Reibring 6 und Bremstrommel 2, Ausbildung von Hinterschneidungen zwischen Bremstrommel 2 und Reibring 6 oder ähnliches) kann damit für die beschriebenen Ausführungen weder durch elektrochemische noch durch thermische Einflüsse gefährdet werden.

Zur zusätzlichen Erhöhung der Leistungsfähigkeit des Reibringes 6 ist es möglich, den MMC-Werkstoff ergänzend durch Carbonfasern zu verstärken bzw. solche Carbonfasern auch noch zu verflechten. Ebenso können auch die keramischen Bestandteile innerhalb des MMC-Werkstoffes des Reibringes 6 auf vielfältige Weise innerhalb des Reibringes enthalten sein. Sie können entweder in Form von Partikeln oder kurzen Fasern innerhalb einer Schmelze als Reibring vergossen werden oder aber in Form eines aus Keramikfasern bestehenden Preßlinges, der bereits die grundlegende Kontur des späteren Reibringes besitzt, mit metallischem Werkstoff infiltriert werden.

Für die in Fig. 1 dargestellte Ausführung der Bremstrommel-Baugruppe 1 ist die Bremstrommel 2 mit integriertem Reibring 6 über einen Flansch 7 mit der Nabe 3 einer Fahrzeugachse verbunden. Üblicherweise wird dabei der nabenseitige Flansch über Bohrungen 8 im Flansch 7 und in der Bremstrommel 2 mit der Bremstrommel 2 verschraubt. Die im wesentlichen rohrförmige Nabe 3 besitzt auf ihrer radialen Innenfläche 9 eine geeignete Kontur zur Aufnahme nicht gezeigter Achslager.

Die in Fig. 2 gezeigte Ausführung einer Bremstrommel-Baugruppe 1 besitzt eine einteilige Ausführung aus Bremstrommel 2 und Nabe 3. Die Bremstrommel 2 geht dabei einstückig in die rohrförmige Nabe 3 über, wobei Bremstrommel 2 und Radnabe bevorzugt aus dem gleichen Leichtmetall-Gußwerkstoff bestehen (z.B. Aluminium bzw. Titan).

Gleichzeitig wird um Schutz ersucht für verschiedene Varianten von Herstellverfahren für eine oben beschriebene Bremstrommel-Baugruppe 1 bzw. insbesondere die verdrehsichere Verbindung des Reibringes 6 innerhalb der Bremstrommel 2 unter Einhaltung der bereits beschriebenen Merkmale für die Bremstrommel-Baugruppe 1. In einer ersten Variante des Herstellverfahrens wird der fertige Reibring 6 vorzugsweise aus einem MMC-Werkstoff mit einem Leichtmetall-Werkstoff der Bremstrommel umgossen, wobei vorzugsweise der MMC-Werkstoff des Reibringes 6 als Basismetall genau das Leichtmetall aufweist, aus dem die Bremstrommel gegossen wird. Dabei entsteht idealerweise während des Umgießens des fertigen Reibringes 6 neben dem Reib- und Formschluß noch ein Stoffschluß zwischen Reibring und Bremstrommel durch geringfügiges Aufschmelzen der radial außenliegenden Umfangsfläche des Reibringes 6. Zur Verhinderung eines übermäßigen Aufschmelzen des Reibringes, wird dieser während des Umgießens mit dem Bremstrommelwerkstoff gekühlt, beispielsweise über einen zylinderförmigen Kern, auf dem der Reibring 6 während des Gußvorganges positioniert ist.

In einer zweiten Verfahrensvariante wird zunächst die Bremstrommel mit gewünschtem Werkstoff in die gewählte fertige Kontur gegossen und in die fertige Bremstrommel 2 wird anschließend der vorzugsweise aus MMC-Werkstoff bestehende Reibring 6 in die Bremstrommel 2 eingegossen, z.B. durch ein Schleudergußverfahren. Auch bei diesem Herstellverfahren kann zur Vermeidung eines übermäßigen Aufschmelzens in diesem Falle der Bremstrommel 2 eine entsprechende Kühlung der Bremstrommel 2 beispielsweise über den Gießkasten vorgesehen sein.

In einer letzten Variante des Herstellverfahrens für eine gattungsgemäße Bremstrommel-Baugruppe 1 sind Bremstrommel 2 und Reibring 6 in ihrer fertigen Gestalt beispielsweise durch Gießen hergestellt. Die beiden getrennten Einzelteile lassen sich danach auf unterschiedliche Weise auf mechanischem Wege miteinander drehfest verbinden. Dazu kann der Reibring 6 in die entsprechende axial sich erstreckende Wand 4 der Bremstrommel 2 beispielsweise eingepreßt oder eingeschrumpft werden, oder aber auch auf alternativem Wege (z.B. durch Verstemmen, Rollnieten etc.) verdrehsicher innerhalb der Bremstrommel 2 fixiert werden. Bei mechanischer Verbindung von Bremstrommel 2 und Reibring 6 wird ein erhöhter Aufwand wie beim Umgießen des Reibringes 6 bzw. Eingießen des Reibringes in die Bremstrommel 2 vermieden.

Selbstverständlich ist die Auswahl des Werkstoffes für Bremstrommel 2 und Reibring 6 sowie auch die Auswahl des entsprechenden Herstellverfahrens nicht auf die beschriebenen Ausführungsvarianten beschränkt und läßt zudem jede Kombination der einzelnen Patentansprüche zu.

## Patentansprüche

1. Bremstrommel-Baugruppe (1), bestehend aus einer topfförmigen Bremstrommel (2), die verdrehfest an einer Nabe (3) einer Fahrzeugachse befestigt ist, sowie einem verdrehsicher an der Bremstrommel (2) angeordneten Reibring (6), an den bei Bremsbetätigung zumindest eine Bremsbacke radial anlegbar ist, dadurch **gekennzeichnet**, daß Bremstrommel (2) und Reibring (6) aus unterschiedlichen Werkstoffen bestehen, wobei Bremstrommel-Werkstoff und Reibring-Werkstoff einen nahezu gleichen thermischen Ausdehnungskoeffizienten besitzen.

2. Bremstrommel-Baugruppe (1) nach Anspruch 1, dadurch **gekennzeichnet**, daß Bremstrommel-Werkstoff und Reibring-Werkstoff einen etwa gleichen Potentialwert in der elektrischen Spannungsreihe der chemischen Elemente aufweisen.

3. Bremstrommel-Baugruppe (1) nach einem der vorhergehenden Ansprüche, dadurch **gekennzeichnet**, daß die Bremstrommel (2) aus Leichtmetall besteht, vorzugsweise aus Aluminium bzw. Titan.

4. Bremstrommel-Baugruppe (1) zumindest nach einem der vorhergehenden Ansprüche, dadurch **gekennzeichnet**, daß der Reibring-Werkstoff keramische Bestandteile enthält.

5. Bremstrommel-Baugruppe (1) nach einem der vorhergehenden Ansprüche, dadurch **gekennzeichnet**, daß der Reibring (6) aus einem Metal-Matrix-Composite-Werkstoff (MMC) besteht.

6. Bremstrommel-Baugruppe (1) nach Anspruch 5, dadurch **gekennzeichnet**, daß der MMC-Werkstoff des Reibringes (6) zumindest anteilig den Werkstoff enthält, aus dem die Bremstrommel (2) besteht.

7. Bremstrommel-Baugruppe (1) nach einem der vorhergehenden Ansprüche, dadurch **gekennzeichnet**, daß die Nabe (3) einstückig an die Bremstrommel (2) angeformt ist.

8. Herstellverfahren für eine Bremstrommel-Baugruppe (1) nach einem der vorhergehenden Ansprüche, dadurch **gekennzeichnet**, daß der Reibring (6) mit dem Bremstrommel-Werkstoff umgossen wird.

9. Herstellverfahren nach Anspruch 8, dadurch **gekennzeichnet**, daß der Reibring (6) zumindest stellenweise während des Umgießens mit dem Bremstrommel-Werkstoff gekühlt wird.

10. Herstellverfahren für eine Bremstrommel-Baugruppe (1) nach einem der Ansprüche 1 bis 7, dadurch **gekennzeichnet**, daß der Reibring (6) in die Bremstrommel eingegossen wird (z.B. im Schleudergußverfahren).

11. Bremstrommel-Baugruppe (1) nach einem der Ansprüche 1 bis 7, dadurch **gekennzeichnet**, daß der Reibring (6) auf mechanischem Wege unlösbar mit der Bremstrommel (2) verbunden ist (z.B. durch Einpressen, Verstemmen, Einschrumpfen, Rollnieten etc.).

12. Herstellverfahren für eine Bremstrommel-Baugruppe (1) nach Anspruch 11, dadurch **gekennzeichnet**, daß der Reibring (6) auf mechanischem Wege unlösbar mit der Bremstrommel (2) verbunden wird (z.B. durch Einpressen, Verstemmen, Einschrumpfen, Rollnieten etc.).
